(19) Europäisches Patentamt
European Patent Office
Office européen des brevets

(11) **EP 4 047 401 A1**

(12) **EUROPEAN PATENT APPLICATION**

(43) Date of publication:
**24.08.2022 Bulletin 2022/34**

(21) Application number: **22152270.9**

(22) Date of filing: **19.01.2022**

(51) International Patent Classification (IPC):
$G02B\ 6/36$ (2006.01)   $G01B\ 9/00$ (2006.01)
$G01D\ 5/26$ (2006.01)   $G01J\ 3/02$ (2006.01)
$G01N\ 21/00$ (2006.01)

(52) Cooperative Patent Classification (CPC):
**G02B 6/3624; G01B 9/00; G01N 21/45;**
G01N 2021/458

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.02.2021 SK 122021**

(71) Applicant: **Zilinská Univerzita V Ziline**
**010 26 Zilina (SK)**

(72) Inventors:
• **MARTINCEK, Ivan**
**010 01  ilina 1 (SK)**
• **GORAUS, Matej**
**038 35 Valca (SK)**
• **KOVACIKOVA, Tatiana**
**900 42 Miloslavov - Al betin Dvor (SK)**

(74) Representative: **Wörz, Volker Alfred**
**Herrmann Patentanwälte**
**Königstraße 30**
**70173 Stuttgart (DE)**

(54) **POLYMER FIBER OPTIC EXTENSION FOR SENSING APPLICATIONS**

(57) The polymer fiber optic extension for sensing applications is a photonic element that is placed on the front of the optical fiber. This photonic element contains specially positioned reflecting surfaces which form two beams from the optical field of mode $LP_{01}$ emanating from the core of the optical fiber, which propagate in the polymer extension. After multiple reflections from the reflecting surfaces, these two beams return again into the core of the optical fiber, where they interfere with each other. One of the beams, which propagates in the polymer extension, passes through a gap in the polymer extension, which can be filled with a suitable optical medium. By measuring the interference signal that is generated in the core of the optical fiber after binding of reflected beams propagating in the polymer extension, it is possible to determine the physical properties of the medium that fills the gap in the polymer extension, and therefore it is possible to use the polymer extension for sensing applications.

**EP 4 047 401 A1**

**Description**

**Field of technology**

The invention relates to the construction of a polymer extension which can be placed on the front of an optical fiber and by means of which an interference optical field is created in the core of the optical fiber by means of which various physical quantities of optical media can be measured. The field of technology to which the invention relates is fiber optics and measurement technology.

**Prior art**

Fiber optics is currently an extended area of optics, which finds use also in measurement technology. Optical fibers have been used as a sensing optical element for measuring physical quantities for several decades. In the case of optical fiber sensors, the dependence of the phase, wavelength or intensity of the optical radiation propagating through the optical fiber on the measured physical quantity is used to measure various physical quantities. A modern field in fiber optics is the creation of so-called laboratories on a fiber, which are also formed by the integration of various types of photonic structures, usually with the end of the optical fiber [A Ricciardi et al., Lab-on-Fiber devices as an all around platform for sensing, Optical fiber technology, vol. 19, p. 772-784, 2013].

One of the most widely used physical phenomena used in photonic structures integrated with optical fibers for sensing applications is light interference. When light interferes, two or more coherent light waves merge. Various types of interferometers and combinations thereof, such as Fabry-Perot, Mach-Zehnder, Michelson, and others, are used to create light interference in optical fibers. The individual types of interferometers in optical fibers differ from each other in the way of the arrangement of reflecting surfaces and structures on which light propagating in optical fiber is partially or completely reflected and divided [S. Pevec, D. Donlagic, Multiparameter fiber-optic sensors: a review, Optical Engineering, vol. 58, art. 072009, 2019].

In creating polymer photonic structures integrated with the end of optical fibers, which are used in the creation of various types of optical sensors, structures that have the properties of Fabry-Pérot interferometers are very often used [M. Yao et al., Optical fiber-tip sensors based on in situ $\mu$-printed polymer suspended-microbeams, Sensors, vol. 18, art. 1825, 2018]. In such structures, two reflecting surfaces are formed, on which the light beam that propagates through the structure is usually partially reflected. The light beam emanating from the optical fiber core into the photonic structure, which propagates through the structure, is partially reflected and partially passes further on the first reflecting surface and impinges on the second reflecting surface, where it is either partially or completely reflected, and returns back to the first surface, where it is partially reflected again and partially passed further. By such reflections, it is possible to form two dominant coherent light beams from one light beam, which, after reflections and binding into the core of the optical fiber, propagate in one direction and interfere with each other. Various constructions of photonic structures are used to create two or more reflecting surfaces in photonic structures in order to create light interference.

**Summary of the invention**

The present invention provides a novel method of arranging reflecting surfaces in a polymer photonic structure to provide a photonic extension that can be placed on the front of an optical fiber in which it comes to interference of light beams emanating from the core of the optical fiber and after reflection from the reflecting surfaces, they return again into the core of the optical fiber. The described polymer photonic extension can be integrated with the optical fiber front, which makes it possible to create a laboratory-type optical fiber sensor on the fiber.

Optical radiation propagates through optical fibers through electromagnetic field modes. Assuming that the first linearly polarized mode of the electromagnetic field, denoted $LP_{01}$, propagates through the core of the optical fiber; the optical field of the mode $LP_{01}$ that emanates from the circular core of the optical fiber is circularly symmetric. If above the core of the optical fiber two reflecting surfaces arranged in the shape of the letter V are placed, which are part of a polymer extension which can be placed on the front of an optical fiber, where the center of the reflecting surface arranged in the shape of the letter V is placed above the center of the core of the optical fiber, the optical radiation emanating from the core of the optical fiber and incident on the reflecting surfaces at an angle of incidence $\beta$ measured from the normal of the reflecting surfaces, divides after reflection from the reflecting surfaces into two beams. These two beams are reflected from the reflecting surfaces at the same angle of reflection $\beta$ measured from the normal of the reflecting surfaces as the angle of incidence of the $\beta$ beams on the reflecting surfaces. In this way, the beam of optical radiation corresponding to the mode $LP_{01}$ and emanating from the core of the optical fiber is divided into two beams which propagate in the optical medium of the polymer extension in different directions. If reflective surfaces are placed in the path of these beams, on which the beams will impinge perpendicularly, the beams will bounce back from them and propagate along the same paths along which they propagated to the perpendicular reflecting surfaces back into the core of the optical fiber. In this way, two coherent beams of optical radiation have formed in the core of the optical fiber, which will interfere with each other. If the optical paths of the beams propagating from the core of the optical fiber to the perpendicular reflecting surfaces and back in the polymer extension are the same and an air gap of length $l$ is inserted into the path of one of the beams reflected from the reflecting surface arranged in the shape of the letter V, the intensity $I$ of the optical signal bound from the polymer extension after the reflections of the beams from the reflecting surfaces into the core of the optical fiber depending on the wavelength $\lambda$ of the optical radiation can be expressed by a mathematical relation:

$$I(\lambda) = I_1(\lambda) + I_2(\lambda) + 2\sqrt{I_1(\lambda)I_2(\lambda)}\cos\left(\frac{4\pi\left(n_1(\lambda) - n_2(\lambda)\right)}{\lambda}l\right), \qquad (1)$$

where $I_1$, $I_2$ are the optical signal intensities of the individual beams, $\lambda$ is the wavelength of the optical radiation, $n_1$ is the refractive index of the polymer of the polymer extension, $n_2$ is the refractive index of the medium placed in the gap and $l$ is the gap length in the direction of the beam passing through the gap.

According to equation (1), at constant values of physical quantities $I_1$, $I_2$, $n_1$ a $l$, the spectral dependence of the intensity $I(\lambda)$ of the optical signal bound to the optical fiber is a function of the refractive index $n_2$ of the medium placed in the gap of length $l$. If this optical medium changes; its refractive index also changes. A change in the refractive index of the optical medium will also affect the change in the optical signal $I(\lambda)$, which can be detected. By detecting the optical signal $I(\lambda)$, it is therefore possible to evaluate the properties of the optical medium that is in the gap.

The essence of the described invention is the construction of a polymer extension, which makes it possible to create an interfering optical field in the core of the optical fiber, where the polymer extension can be placed at the end of the optical fiber. The polymer extension contains a total of four reflecting surfaces, which divide the optical radiation emanating from the core of the optical fiber into two beams, which return back into the core of the optical fiber after reflections on the reflecting surfaces, where they interfere with each other. In addition, one of the reflected beams passes through a gap that is freely accessible and can be filled with optical media with different refractive indices. The optical medium in the gap causes a phase change in the interfering beams, which can be detected. The detected signal can be used to sense the physical properties of the gap-filling medium in the polymer extension.

**Overview of figures in the drawings**

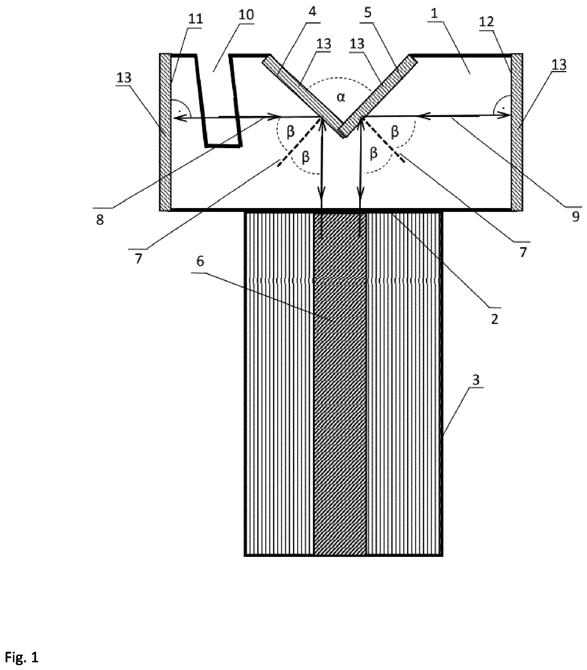

The invention is further illustrated by means of the drawings, in which Fig.1 shows a side view of a polymer extension placed on the front of an optical fiber, in which optical radiation emanating from the core of the optical fiber propagates, where the reflecting surfaces arranged in the shape of the letter V form an angle $\alpha = 90°$.

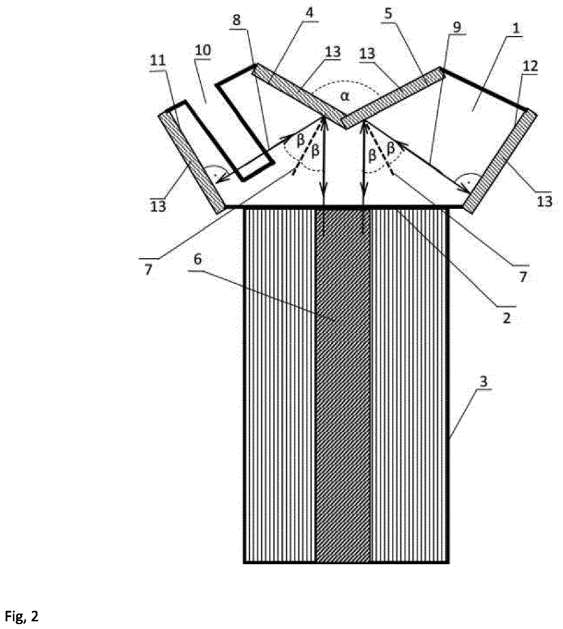

Fig. 2 is a side view of a polymer extension placed on the front of an optical fiber, in which the optical radiation emanating from the core of the optical fiber propagates, where the reflecting surfaces arranged in the shape of the letter V form an angle $\alpha = 120°$.

**Examples of embodiments of the invention**

Example 1

Fig. 1 shows a side view of the construction of a polymer extension **1** placed on the front **2** of an optical fiber **3**. The optical radiation emanating from the core **6** of the optical fiber **3** propagates in the polymer from which the polymer extension **1** is made and impinges on the reflecting surfaces **4** and **5** at an angle of incidence $\beta = 45°$ measured from the normal **7** of the reflecting surfaces **4** and **5**, on which an aluminum layer **13** with a thickness of 100 nm is applied on the outside of the polymer extension **1**, where the reflecting surfaces **4** and **5** are arranged in the shape of the letter V and form an angle $\alpha = 90°$. After the incidence on the reflecting surfaces **4** and **5**, the optical radiation is divided into two optical beams **8** and **9**, which propagate at an angle of incidence $\beta = 45°$ measured from the normal **7** of the reflecting surfaces **4** and **5** to the reflecting surfaces **11** and **12**, on which the optical beams **8** and **9** fall perpendicularly. An aluminum layer **13** with a thickness of 100 nm is applied to the reflecting surfaces **11** and **12** on the outside of the polymer extension **1**. An air gap **10** is inserted in the path of the optical beam **8**. The optical beam passes through the air gap **10** and propagates further to the reflecting surface **11**. On the reflecting surfaces **11** and **12**, the optical beams **8** and **9** bounce back and propagate back into the core **6** of the optical fiber **3** along the same paths along which they propagated from the core **6** of the optical fiber **3** to the reflecting surfaces **11** and **12**. After the optical beams **8** and **9** are bound into the core **6** of the optical fiber **3**, the optical beams **8** and **9** interfere, where the resulting optical signal is given by (1).

Example 2

Fig. 2 shows a side view of the construction of a polymer extension **1** placed on the front **2** of the optical fiber **3.** The optical radiation emanating from the core **6** of the optical fiber **3** propagates in the polymer from which the polymer extension **1** is made and impinges on the reflecting surfaces **4** and **5** at an angle of incidence $\beta = 30°$ measured from the normal **7** of the reflecting surfaces **4** and **5,** on which an aluminum layer **13** with a thickness of 100 nm is applied on the outside of the polymer extension **1**, where the reflecting surfaces **4** and **5** are arranged in the shape of the letter V and form an angle $\alpha = 120°$. After the incidence on the reflecting surfaces **4** and **5**, the optical radiation is divided into two optical beams **8** and **9,** which propagate at an angle of incidence $\beta = 30°$ measured from the normal **7** of the reflecting surfaces **4** and **5** to the reflecting surfaces **11** and **12,** on which the optical beams **8** and **9** fall perpendicularly. An aluminum layer **13** with a thickness of 100 nm is applied to the reflecting surfaces **11** and **12** on the outside of the polymer extension **1.** An air gap **10** is inserted in the path of the optical beam **8**. The optical beam passes through the air gap **10** and propagates further to the reflecting surface **11**. On the reflecting surfaces **11** and **12**, the optical beams **8** and **9** bounce back and propagate back into the core **6** of the optical fiber **3** along the same paths along which they propagated from the core **6** of the optical fiber **3** to the reflecting surfaces **11** and **12**. After the optical beams **8** and **9** are bound into the core **6** of the optical fiber **3**, the optical beams **8** and **9** interfere, where the resulting optical signal is given by (1).

**Industrial applicability**

The polymer fiber optic extension can find use in the creation of optical fiber sensors for measuring various physical quantities, such as pressure, temperature, refractive index and the like, which can be used in various industrial applications where for various reasons (safety, technical, etc.) it is necessary to use sensors that work on the principle of light conduction.

**Claims**

1. Polymer fiber optic extension for sensing applications, which is placed on the front (2) of the optical fiber (3) with a core (6), **characterized in that** it contains two reflecting surfaces (4) and (5) forming an angle $\alpha$ less than 180 degrees for the reflection and division of the optical radiation emanating from the core (6) of the optical fiber (3) into two optical beams (8) and (9), then two reflecting surfaces (11) and (12) for the reflection of perpendicularly incident optical beams (8) and (9) and their return into the core (6) of the optical fiber (3) along the same path as they propagated from the core (6) of the optical fiber (3) to the reflecting surfaces (11) and (12).

2. Polymer fiber optic extension for sensing applications according to claim 1 **characterized in that** it contains an air gap (10) inserted in the path of the optical beam (8) to the reflecting surface (11).

3. Polymer fiber optic extension for sensing applications according to claim 1 and 2 **characterized in that** the air gap (10) is open on at least one side.

4. Polymer fiber optic extension for sensing applications according to claim 1, 2, 3 **characterized in that** a metal layer (13) is applied to the reflecting surfaces (4) and (5) and/or (11) and (12).

Fig. 1

Fig, 2

Europäisches
Patentamt

European
Patent Office

Office européen
des brevets

# EUROPEAN SEARCH REPORT

Application Number

EP 22 15 2270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/210797 A1 (YU MIAO [US] ET AL) 23 August 2012 (2012-08-23) * paragraph [0066] – paragraph [0130] * * figure 2 * ----- | 1-4 | INV. G02B6/36 G01B9/00 G01D5/26 G01J3/02 G01N21/00 |
| Y | WO 2015/153982 A1 (GEN HOSPITAL CORP [US]) 8 October 2015 (2015-10-08) * paragraph [0064] * * paragraph [0076] * * figures 3, 7 * ----- | 1-4 | |
| Y | US 9 702 816 B2 (SKF AB [SE]) 11 July 2017 (2017-07-11) * column 2, line 10 – column 4, line 45 * * figures 1,2 * ----- | 1-4 | |

TECHNICAL FIELDS
SEARCHED      (IPC)

G02B
G01D
G01B
G01J
G01N
G01L

The present search report has been drawn up for all claims

| Place of search | Date of completion of the search | Examiner |
|---|---|---|
| The Hague | 10 June 2022 | Szachowicz, Marta |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

...............................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

**EP 22 15 2270**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-06-2022**

| Patent document cited in search report | | Publication date | Patent family member(s) | | Publication date |
|---|---|---|---|---|---|
| US 2012210797 | A1 | 23-08-2012 | NONE | | |
| WO 2015153982 | A1 | 08-10-2015 | US 2017017075 | A1 | 19-01-2017 |
| | | | WO 2015153982 | A1 | 08-10-2015 |
| US 9702816 | B2 | 11-07-2017 | CN 106030263 | A | 12-10-2016 |
| | | | CN 110715899 | A | 21-01-2020 |
| | | | DE 112013007716 | T5 | 15-09-2016 |
| | | | US 2017045445 | A1 | 16-02-2017 |
| | | | WO 2015090359 | A1 | 25-06-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A RICCIARDI et al.** Lab-on-Fiber devices as an all around platform for sensing. *Optical fiber technology,* 2013, vol. 19, 772-784
- **S. PEVEC ; D. DONLAGIĊ.** Multiparameter fiber-optic sensors: a review. *Optical Engineering,* 2019, vol. 58
- **M. YAO et al.** Optical fiber-tip sensors based on in situ μ-printed polymer suspended-microbeams. *Sensors,* 2018, vol. 18